# EUROPÄISCHE PATENTSCHRIFT

(11) **EP 0 403 769 B1**
(45) Veröffentlichungstag und Bekanntmachung des Hinweises auf die Patenterteilung: **20.07.1994**
(21) Anmeldenummer: 90108208.1
(22) Anmeldetag: 30.04.1990
(51) Int. Cl.: G01N 21/21, G01N 21/55, G01N 21/59, G01N 21/00

(54) **Verfahren zur Untersuchung der physikalischen Eigenschaften dünner Schichten**
Procedure for the investigation of physical properties of thin layers
Procédé pour examiner les propriétés physiques de couches minces

(30) Priorität: 03.05.1989 DE 3914631
(43) Veröffentlichungstag der Anmeldung: 27.12.1990
(73) Patentinhaber: BASF Aktiengesellschaft, 67063 Ludwigshafen (DE)
(72) Erfinder: Hickel, Werner, Dr., D-6800 Mannheim 24 (DE); Knoll, Wolfgang, Dr., D-6500 Mainz (DE)

(56) Entgegenhaltungen:
- EP-A- 0 019 088
- CH-A- 663 473
- DE-A- 2 456 452
- DE-C- 3 720 387
- GB-A- 2 156 970
- US-A- 4 672 196
- NATURE; INTERNATIONAL WEEKLY JOURNAL OF SCIENCE, Band 332, Nr. 6165, 14. April 1988 BENNO ROTHENHÄUSLER et al.: "Surface-plasmon microscopy" Seiten 615-617
- REVIEW OF MODERN PHYSICS, Band 49, Nr. 2, April 1977, American Physical Society P.K. TIEN "Integrated optics and new wave phenomena in optical waveguides" Seiten 361-377
- APPLIED PHYSICS LETTERS, Band 14, Nr. 9, American Institute of Physics P.K. TIEN et al.: "Modes of propagating light waves in thin deposited semiconductor films" Seiten 291-294

## Beschreibung

Die Erfindung betrifft ein Verfahren zur Untersuchung der physikalischen Eigenschaften dünner Schichten mit Hilfe von polarisiertem Licht.

Abbildende optische Verfahren zur Untersuchung und Charakterisierung der physikalischen Eigenschaften von Oberflächen in gasförmiger und flüssiger Umgebung sind in vielen Bereichen der Technik von Interesse. Vor allem Untersuchungsmethoden für dünne und ultradrünne dielektrische Schichten mit Dicken von einigen »m bis in den Sub-Nanometer Bereich werden in Physik, Chemie, Mikrolithographie, Sensorik und Immunologie in steigendem Maße benötigt. Ziel aller Verfahren ist die Darstellung von Oberflächenstrukturen mit möglichst großer Lateralauflösung und hohem Kontrast.

Zur Untersuchung dünner und ultradünner Schichten mit hohem Kontrast eignen sich die abbildende Nullellipsometrie (vgl. EP-A-19 088) sowie die Oberflächenplasmonen-Mikroskopie (vgl. B. Rothenhäusler, W. Knoll, Nature, 332, 615 (1988)). Nachteil der abbildenden Nullellipsometrie ist der hohe verfahrenstechnische Aufwand und die Beschränkung auf monochromatisches Licht. Der Aufbau eines Oberflächenplasmonen-Mikroskops dagegen besteht nur aus wenigen optischen Komponenten. Außerdem ist der Kontrast dieses Verfahrens besonders im Sub-Nanometer Bereich höher (vgl. B. Rothenhäusler, Dissertation München (1987)). Nachteil des Oberflächenplasmonen-Mikroskops ist jedoch die Beschränkung auf Schichten deren Schichtdicke kleiner als 100 nm ist.

Der Erfindung liegt die Aufgabe zugrunde ein Verfahren anzugeben, das es ermöglicht, mit geringem verfahrenstechnischem Aufwand sowohl dünne als auch ultradünne Schichten bezuglich Oberflächen- und Brechungsindexstrukturen mit hohem Intensitätskontrast, d.h. hoher vertikaler Auflösung, und guter Lateralauflösung zu untersuchen.

Gegenstand der vorliegenden Erfindung ist ein Verfahren zur Untersuchung der physikalischen Eigenschaften dünner Schichten mit Hilfe polarisierten Lichtes, mit dem die zu untersuchende Schicht oder das zu untersuchende Schichtsystem bestrahlt wird und das reflektierte Licht oder das transmittierte Licht auf ein Abbildungssystem gelenkt wird, das dadurch gekennzeichnet ist, daß in der zu untersuchenden Schicht oder dem zu untersuchenden Schichtsystem durch die Einstrahlung des polarisierten Lichtes Lichtleitermoden angeregt werden.

Die zu untersuchende Schicht bzw. das zu untersuchende Schichtsystem kann dabei auf eine beliebige Festkörperoberfläche, beispielsweise eine Metall- oder Halbleiterschicht aufgebracht sein.

Zur Anregung von Lichtleitermoden in der zu untersuchenden Schicht bzw. dem zu untersuchenden Schichtsystem wird vorzugsweise eine Kopplungsanordnung verwendet.

Als Kopplungsanordnung wird vorzugsweise ein Prisma verwendet, wobei entweder die Basisfläche des Prismas mit einem Abstand von 100 bis 400 nm zur untersuchenden Schicht oder dem zu untersuchenden Schichtsystem angebracht ist oder die zu untersuchende Schicht oder das zu untersuchende Schichtsystem direkt auf der mit einem Metall- oder Halbleiterfilm beschichteten Basisfläche des Prismas aufgebracht ist.

Als Kopplungsanordnung kann jedoch vorteilhafterweise auch eine Gitterstruktur auf einer Festkörperoberfläche verwendet werden, auf die die zu untersuchende Schicht oder das zu untersuchende Schichtsystem aufgebracht ist.

Überraschenderweise gelingt es mit dem erfindungsgemäßen Verfahren, mit geringem apparativem Aufwand Schichten mit Schichtdicken von 0,1 nm bis ca. 1 mm hinsichtlich Oberflächen- und Brechungsindexstrukturen zu untersuchen.

Lichtleitermoden in dünnen transparenten Medien werden von P.K. Tien in Rev. Mod. Phys. 49, 361 (1977) behandelt.

Lichtleitermoden sind elektromagnetische Wellen, die sich in transparenten dünnen Medien ausbreiten können. Die Welle breitet sich parallel zu den Grenzflächen des Mediums aus und ist in Ausbreitungsrichtung gedämpft. Das elektromagnetische Feld fällt an den Grenzflächen des Mediums exponentiell ab.

Zur Anregung von Lichtleitermoden in dünnen dielektrischen Schichten werden im wesentlichen zwei Kopplungsanordnungen verwendet: Prismenkopplung (vgl. P. K. Tien, R. Ulrich, Appl. Phys. Lett. , 14, 291 (1969)) und Gitterkopplung (vgl. D.G. Dalgoutte, C.D.W. Wilkinson, Appl. Optics, 14, 2983 (1975)).

Bei der Prismenkopplung trifft auf ein Prisma parallel (=p) oder senkrecht (=s) polarisiertes Licht, das an der Basisfläche des Prismas total reflektiert wird. Die zu untersuchende lichtleitende Schicht bzw. das Schichtsystem, das sich auf einem festen Träger befindet, wird der Basisfläche des Prismas bis auf einige 100 nm, beispielsweise 100 bis 400 nm, vorzugsweise 150 bis 250 nm, genähert. Bei geeigneter Wahl des Einstrahlwinkels des Lichtes wird in der zu untersuchenden Schicht bzw. dem Schichtsystem eine Lichtleitermode angeregt. Die Intensität des reflektierten Lichtstrahls nimmt bei diesem Winkel ein Minimum an. Als Medium zwischen Prisma und zu untersuchender Schicht bzw. dem Schichtsystem kommen Gase oder Flüssigkeiten zum Einsatz. Alternativ zu diesem Aufbau kann der Spalt zwischen Prisma und zu untersuchender Schicht bzw. bzw. dem Schichtsystem durch eine Metall- oder Halbleiterschicht ersetzt werden. Die zu untersuchende Schicht bzw. das Schichtsystem wird dann auf die Metall- oder Halbleiterschicht aufgebracht.

Bei der Gitterkopplung wird die Oberfläche eines Festkörpers durch ein Präge- oder Ätzverfahren in Form eines Liniengitters moduliert. Auf diese modulierte Oberfläche wird die zu untersuchende Schicht bzw. das Schichtsystem aufgebracht. Wie bei der Prismenkopplung kann bei geeignetem Einstrahlwinkel des einfallenden p- oder s-polarisierten Lichtes eine Lichtleitermode in der zu untersuchenden Schicht bzw. dem Schichtsystem angeregt werden. Die Intensität des reflektierten Lichtes nimmt auch hier ein Minimum an.

Lateralstrukturen einer zu untersuchenden Schicht bzw. eines Schichtsystem führen zu unterschiedlichen Kopplungsbedingungen für Lichtleitermoden. Trifft polarisiertes Licht unter einem festen Winkel auf eine der oben beschriebenen Probenanordnungen, so können Lateralstrukturen der zu untersuchenden Schicht bzw. des Schichtsystems aufgrund der unterschiedlichen Reflexion, d.h. ihrer unterschiedlichen Helligkeit erkannt weden. Bei Einstrahlung unter variablem Winkel kann die Kopplungsbedingung für verschiedene Bereiche der zu untersuchenden Schicht bzw. des Schichtsystems bei unterschiedlichen Einfallswinkeln erfüllt werden, wodurch Lateralstrukturen sichtbar gemacht werden.

Die laterale Auflösung wird durch die Dämpfung der Lichtleitermode beeinflußt. Die Dämpfung einer Lichtleitermode wird durch die Absorption und die Qualität der Oberflächen des lichtleitenden Modiums selbst und durch die Absorption der angrenzenden Medien bestimmt. Für eine gute laterale Auflösung soll die Dämpfung der Lichtleitermode möglichst groß sein.

Die vertikale Auflösung liegt im Sub-Nanometer-Bereich, d.h. Dickenunterschiede einer lichtleitenden Schicht von weniger als 1 nm führen zu einer deutlich unterschiedlichen Reflexion und somit zu einem beobachtbaren Kontrast.

In der Doktorarbeit, "PRISM COUPLER SURFACE SENING, DEPARTMENT OF ELECTRICAL ENGINEERING, IMPERIAL COLLEGE, EXHIBITION ROAD, LONDON, SW7 2BT; AUGUST 1988; W.D. MASON" wurde Mikroskopie mit Lichtleitermoden bei guter lateraler Auflösung offenbart. Die Offenbarung dieses Dokumentes bildet den Oberbegriff des Anspruchs 1.

Das erfindungsgemäß zu verwendende Verfahren zur Untersuchung der physikalischen Eigenschaften von dünnen Schichten gemäß Anspruch 1 ist mechanisch und optisch einfach aufgebaut. Sie kann als Lichtleitermodenmikroskop bezeichnet werden. Bevorzugt wird zur Erzeugung von Lichtleitermoden die Prismenkopplung verwendet, wobei an die Prismenoberfläche ein Objektträger mittels Immersionsflüssigkeit geklebt wird, auf dessen Rückseite eine Metallschicht und auf diese die zu untersuchende Schicht bzw. das Schichtsystem aufgebracht ist. Alternativ kann die Metallschicht und die zu untersuchende Schicht bzw. das Schichtsystem auch direkt auf die Prismenoberfläche aufgebracht sein. Als Metalle kommen hierfür Silber, Gold, Kupfer sowie Aluminium oder Schichtsysteme aus diesen Metallen zum Einsatz. Als besonders vorteilhaft hat sich die Verwendung eines Schichtsystems, bestehend aus 2 bis 5 nm Chrom und 40 nm Gold erwiesen. Der dadurch enstandene Spiegel wird mit parallelem monochromatischem, farbigem oder weißem p- oder s-polarisiertem Licht durch eine der beiden freien Seitenflächen des Prismas unter flachem Winkel beleuchtet und mit Hilfe einer achromatischen Linse kleiner Brennweite, welche auf den Spiegel fokussiert ist, durch die andere freie Seitenfläche des Prismas auf einem Schirm, eine Video-Kamera oder ein Okular abgebildet.

Als zu untersuchende Schichten kommen hinsichtlich Brechungsindex und Dicke strukturierte dünne dielektrische Schichten (z B. organische Polymere, siliciumhaltige Polymere, Metalloxidschichten), beispielsweise solche mit einer Dicke von 100 nm bis 1 mm in Frage. Die Schichten können z.B. durch Aufdampfen, Aufschleudern oder mit der Langmuir-Blodgett-Technik auf die Metallschicht aufgebracht werden. Außerdem können hinsichtlich Brechungsindex und Dicke strukturierte ultradünne Schichten mit Dicken von 0,1 nm bis 100 nm untersucht werden. Dazu wird auf das Metall zweckmäßigerweise zuerst eine lichtleitende dielektrische Schicht z.B. durch Aufdampfen, Aufschleudern oder mit der Langmuir-Blodgett-Technik aufgebracht, auf die dann die zu untersuchende Schicht z.B. durch Langmuir-Blodgett(=LB)-Technik, Aufschleudern, Adsorption aus der Flüssigphase, Gießen oder Aufdampfen aufgebracht wird. So können beispielsweise Lipidmonoschichten, Polymere, strukturierte SiO₂-Schichten und strukturierte Cd-Arachidat-LB-schichten untersucht werden.

### Beispiel 1

Die Basisfläche eines Prismas aus SF57-Glas wird mt einem Schichtsystem aus 3 nm Chrom und 40 nm Gold bedampft Als zu untersuchende Schicht wird eine strukturierte SiO₂-Aufdampfschicht verwendet. Die Herstellung geschieht wie folgt: In einem ersten Aufdampfvorgang werden 310 nm SiO₂ auf das Metallschichtsystem aufgedampft. Anschließend wird zur Strukturierung in einem zweiten Aufdampfprozeß nochmals 4 nm SiO₂ durch eine Maske (Elektronenmikroskopienetz) aufgedampft.

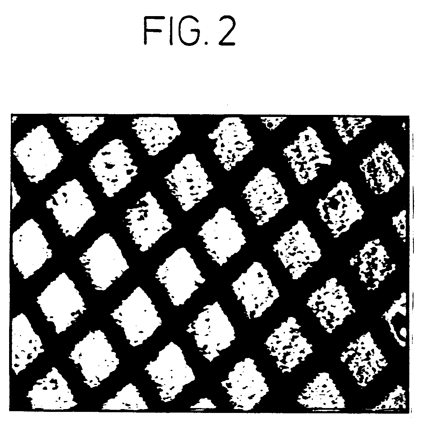

An homogenen Bereichen der Probe wurde zuerst die reflektierte Intensität in Abhängigkeit des Einfallswinkels des Lichts gemessen Als Lichtquelle wurde ein HeNe-Laser (λ = 633 nm) verwendet. Die Messungen wurden mit p- und s-polarisiertem Licht durchgeführt. Die Lichtleitermoden der 310 nm und 314 nm dicken homogenen SiO₂-Schichten treten bei deutlich unterschiedlichen Einfallswinkeln auf. Diese Winkelverschiebung wird zur Kontrasterzeugung ausgenutzt. Figur 2 zeigt eine solche Aufnahme der strukturierten SiO₂-Schicht. Die schwarzen Stege sind 20 »m breit. Die Aufnahme wurde mit p-polarisiertem Licht (λ = 633 nm) bei einem Einfallswinkel Θ = 31,3° aufgenommen. In den 310 nm dicken SiO₂ Bereichen wird die Lichtleitermode angeregt. Die reflektierte Intensität ist minimal. Deshalb erscheinen diese Bereiche in der Aufnahme dunkel. Die 314 nm dicken SiO₂ Bereiche erfüllen nicht die Kopplungsbedingung, es kann keine Lichtleitermode angeregt werden. Diese Bereiche sind in der Abbildung hell. Durch Erhöhung des Einfallswinkels um Θ = 1,10° kann der Kontrast invertiert werden, da dann die 314 nm dicken SiO₂-Bereiche die Kopplungsbedingung erfüllen, d.h. eine Lichtleitermode angeregt wird. In den 310 (nm dicken SiO₂-Bereichen kann keine Lichtleitermode mehr angeregt werden. Aufnahmen mit s-polarisiertem Licht führen zum gleichen Ergebnis.

### Beispiel 2

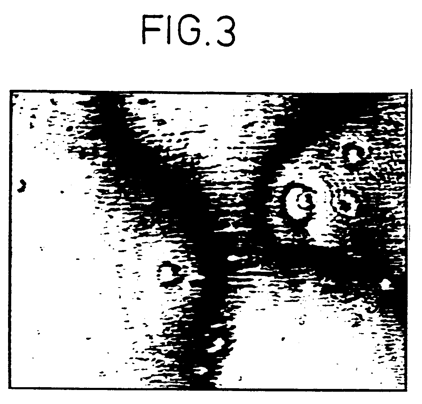

Die Basisfläche eines Prismas aus SF57-Glas wird mit 50 nm Silber beschichtet. Darauf wird ein Polyelektrolytfilm 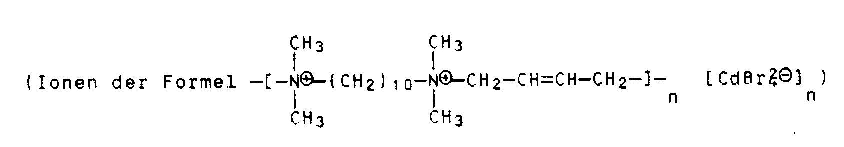
aufgeschleudert. Alle Untersuchungen wurden mit p-polarisiertem Licht eines HeNe-Lasers durchgeführt. Die Messung der reflektierten Intensität in Abhängigkeit des Einfallswinkel des Lichts zeigte, daß in dem aufgeschleuderten Polyelektrolytfilm nur eine sehr breite Lichtleitermode mit geringer Kopplung angeregt werden kann. Mögliche Ursache ist die Absorption in der Polyelektrolytschicht, die die Dämpfung der Lichtleitermode erhöht, oder die schlechte Oberflächenqualität der Schicht. Letzteres kann durch das erfindungsgemäße Verfahren überprüft werden. Fig. 3 zeigt eine entsprechende Aufnahme des Lichtleitermoden-Mikroskops von der Oberflache des Polyelektrolytfilms bei Θ = 44,5°. Die Größe des Bildausschnittes beträgt 570 x 420 »m². Nur in den dunklen Bereichen kann eine Lichtleitermode angeregt werden. Die anderen hellen Bereiche unterscheiden sich hinsichtlich der Dicke, weshalb es nicht möglich ist, bei einem Einfallswinkel von Θ = 44,5° eine Lichtleitermode anzuregen. Mit winkelabhängigen Aufnahmen von Θ₁ = 43,1° bis Θ₂ = 45,9° mit ΔΘ = 0,4° kann ein Höhenliniendiagramm erstellt werden. Dazu werden von jeder Aufnahme die Bereiche mit dem geringsten Grauwert, also der kleinsten Lichtreflexion bestimmt. Das sind Bereiche einheitlicher Dicke. Durch Modellrechnungen für das Schichtsystem mit den Fresnelschen Gleichungen (vgl. H. Wolter in "Handbuch der Physik", S. Flügge (ed.), Springer Verlag, Berlin,1956) kann die jedem Winkel entsprechende Dicke berechnet werden. Der Brechungsindex des Materials war bekannt und beträgt n = 1,63. Diese Auswertung zeigt, daß die mittlere Dicke der Schicht, bezogen auf die 570 x 420 »m² große untersuchte Fläche, 338 nm beträgt. Die Dickenschwankungen betragen ± 10 nm. Diese starke Heterogenität der Oberfläche verursacht die Breite der Lichtleitermode sowie die schlechte Kopplung.

### Beispiel 3

Am Beispiel einer Lipidmonoschicht soll gezeigt werden, wie eine strukturierte ultradünne Schicht auf einer lichtleitenden dielektrischen Schicht untersucht werden kann.

Auf einen BK7-Glasobjektträger wurde 3 nm Chrom und 40 nm Gold aufgedampft. Anschließend wurde eine 340 nm dicke SiO₂ Schicht aufgedampft. Die SiO₂-Schicht dient als lichtleitende Schicht.

Als zu untersuchende Lipidmonoschicht wird ein Langmuir-Blodgett-Film aus Dimyristoylphosphatidsäure (=DMPA) verwendet. DMPA (in Chloroform gelöst) wird auf reinem Wasser gespreitet und nach Vedunsten des Lösungsmittels mittels der Langmuir-Blodgett-Technik bei einem Druck von 5 - 6 mN·m⁻¹ (in der Koexistenzphase) auf den wie oben beschriebenen präparierten BK7-Glasobjektträger übertragen. Es ist bekannt, daß Lipidmonoschichten im Koexistenzbereich quasi zweidimensionale Systeme aus kristallinen und amorphen Bereichen sind. Diese Bereiche sollten sich hinsichtlich Dicke und Brechungsindex unterscheiden.

Der so präparierte Objektträger wird mit Immersionsflüssigkeit an ein BK7-Prisma geklebt und mit dem erfindungsgemäßen Verfahren untersucht. Die Untersuchung wurde mit p-polarisiertem Licht eines HeNe-Lasers durchgeführt. Wie die Aufnahmen mit dem Lichtleitermodenmikroskop bei einem Einfallswinkel des Lichts von Θ = 41° zeigen, gelingt es, die geringen Dickenunterschiede der kristallinen und amorphen Bereiche des DMPA sowohl lateral als auch vertikal deutlich aufzulösen.

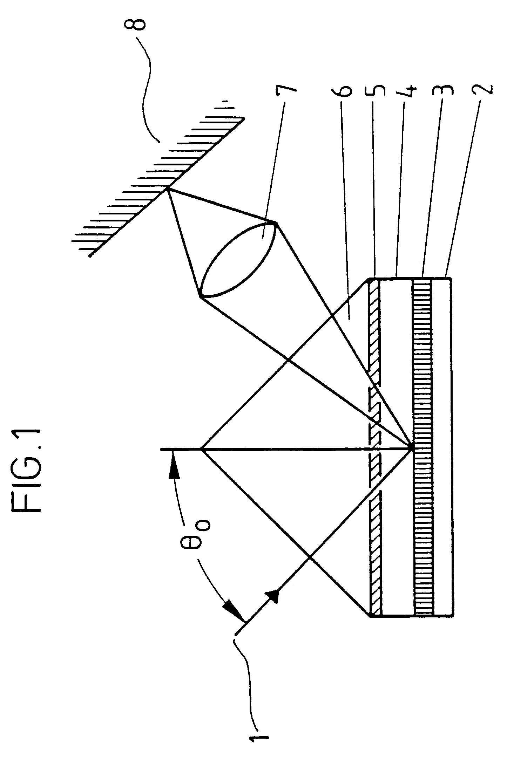

Der Aufbau der für das erfindungsgemäße Verfahren verwendeten Vorrichtung ist schematisch in Figur 1 dargestellt, worin bedeutet
1 = Lichtquelle
2 = zu untersuchende Schicht oder zu untersuchendes Schichtsystem (z.B. strukturierte SiO₂-Schicht oder SiO₂-Schicht und Lipidmonoschicht)
3 = Metallschicht
4 = Glasobjektträger,
5 = Immersionsflüssigkeit
6 = Glasprisma
7 = Linse
8 = Video-Kamera

## Patentansprüche

1. Verfahren zur Untersuchung der physikalischen Eigenschaften dünner Schichten mit Hilfe polarisierten Lichtes, in dem die zu untersuchende Schicht oder das zu untersuchende Schichtsystem bestrahlt wird und das reflektierte Licht oder das transmittierte Licht auf ein Abbildungssystem gelenkt wird, wobei in der zu untersuchenden Schicht oder dem zu untersuchenden Schichtsystem durch die Einstrahlung des polarisierten Lichtes Lichtleitermoden angeregt werden, dadurch gekennzeichnet daß die zu untersuchende Schicht oder das zu untersuchende Schichtsystem auf eine Metall- oder Halbleiterschicht aufgebracht ist.

2. Verfahren nach Anspruch 1, dadurch gekennzeichnet, daß die zu untersuchende Schicht oder das zu untersuchende Schichtsystem auf eine beliebige Festkörperoberfläche aufgebracht ist.

3. Verfahren nach einem der vorhergehenden Ansprüche, dadurch gekennzeichnet, daß zur Anregung von Lichtleitermoden in der zu untersuchenden Schicht oder dem zu untersuchenden Schichtsystem eine Kopplungsanordnung verwendet wird.

4. Verfahren nach Anspruch 4, dadurch gekennzeichnet, daß als Kopplungsanordnung ein Prisma verwendet wird.

5. Verfahren nach Anspruch 5, dadurch gekennzeichnet, daß die Basisfläche des Prismas mit einem Abstand von 100 bis 400 nm zur untersuchenden Schicht oder dem zu untersuchenden Schichtsystem angebracht ist.

6. Verfahren nach Anspruch 5, dadurch gekennzeichnet, daß die zu untersuchende Schicht oder das zu untersuchende Schichtsystem direkt auf der mit einem Metall- oder Halbleiterfilm beschichteten Basisfläche des Prismas aufgebracht ist.

7. Verfahren nach Anspruch 4, dadurch gekennzeichnet, daß als Kopplungsanordnung eine Gitterstruktur auf einer Festkörperoberfläche verwendet wird, auf die die zu untersuchende Schicht oder das zu untersuchende Schichtsystem aufgebracht ist.

## Claims

1. A technique for examining the physical properties of thin films with the aid of polarized light by irradiating the layer or layer system to be examined and directing the reflected or transmitted light onto an imaging system, the polarized light having the effect of exciting waveguide modes in the layer or layer system to be examined, characterized in that the layer or layer system to be examined has been mounted on a metal or semiconductor film.

2. A technique as claimed in claim 1, characterized in that the layer or layer system to be examined has been mounted on any desired solid surface.

3. A technique as claimed in either of the preceding claims, characterized in that the waveguide modes are excited in the layer or layer system to be examined using a coupling arrangement.

4. A technique as claimed in claim 3, characterized in that the coupling arrangement used is a prism.

5. A technique as claimed in claim 4, characterized in that the base of the prism is situated at a distance of from 100 to 400 nm away from the layer or layer system to be examined.

6. A technique as claimed in claim 4, characterized in that the layer or layer system to be examined is situated directly on the metal or semiconductor coated base of the prism.

7. A technique as claimed in claim 3, characterized in that the coupling arrangement used is a grid structure on a solid surface supporting the layer or layer system to be examined.

## Revendications

1. Procédé pour l'examen des propriétés physiques de couches minces à l'aide de lumière polarisée, dans lequel la couche à examiner ou le système de couches à examiner est irradié et la lumière réfléchie ou la lumière transmise est dirigée vers un système de formation d'images, des modes de conduction de lumière étant excités dans la couche à examiner ou le système de couches à examiner par la radiation incidente de la lumière polarisée, caractérisé en ce que la couche à examiner ou le système de couches à examiner est disposé sur une couche de métal ou de semiconducteur.

2. Procédé selon la revendication 1, caractérisé en ce que la couche à examiner ou le système de couches à examiner est disposé sur la surface d'un quelconque corps solide.

3. Procédé selon la revendication 1 ou 2, caractérisé en ce qu'un dispositif d'accouplement est utilisé pour l'excitation de modes de conduction de lumière dans la couche à examiner ou le système de couches à examiner.

4. Procédé selon la revendication 3, caractérisé en ce qu'un prisme est utilisé comme dispositif d'accouplement.

5. Procédé selon la revendication 4, caractérisé en ce que la surface de base du prisme est disposée à une distance de 100 à 400 nm de la couche à examiner ou du système de couches à examiner.

6. Procédé selon la revendication 4, caractérisé en ce que la couche à examiner ou le système de couches à examiner est disposé directement sur la surface de base du prisme, enduite d'un film de métal ou de semiconducteur.

7. Procédé selon la revendication 3, caractérisé en ce qu'il est utilisé, comme dispositif d'accouplement, une structure réticulaire sur la surface d'un corps solide, sur laquelle la couche à examiner ou le système de couches à examiner est disposé.
